# EUROPEAN PATENT APPLICATION

(11) **EP 1 520 670 A1**
(43) Date of publication of application: **06.04.2005**
(21) Application number: 04380133.1
(22) Date of filing: 28.06.2004
(51) Int. Cl.: B27D 1/04, B32B 21/04, E04C 2/24, B29C 63/00

(54) **Industrial composite board for outdoor and indoor use**

(30) Priority: 30.09.2003 ES 200302204
(71) Applicant: Maderas de Llodio, S.A., 01400 Llodio (Alava) (ES)
(72) Inventor: Galan Inchaurbe, D. Jose Maria Javier, 01400 Llodio (Alava) (ES)
(74) Representative: Sanchez del Campo Gonzalez de Ubierna, Ramon

(57) **Abstract**

The board is formed from a conventional plywood core, i.e. formed from a base of a plurality of superimposed sheets of wood, with its grain crossed alternatively and fixed together with adhesive (2), with the special characteristic that, on both faces of the core (1), and even on the edges thereof, coverings formed of plastic sheets (3) and (3') are incorporated, such as PVC, which are fixed to the core (1) by a hot-melt type adhesive (4), so that both the covering sheets (3) and (3') and the adhesive (4) to fix them to the core (1), provide the board unit with very high resistance to the effects of the outside elements. The composite board may serve as a covering for walls which have to be exposed to damp, and in other appropriate applications for the construction sector.

## Description

### OBJECT OF THE INVENTION

The object of the invention is to attain a composite board (plywood plus plastic sheets) which can withstand damp, sharp considerable temperature changes, or any other type of meteorological phenomena, used for both industrial and decorative use.

The board of the invention is especially suitable for the production of floors in the open-air or in enclosures with widespread damp, for the production or covering of walls which should be exposed to similar physical agents, either fixed or mobile, such as, for example, those which form part of trailers for animals, tools, country products, etc. It can likewise be used for different systems in the construction sector.

### BACKGROUND OF THE INVENTION

As is known, plywood boards are produced from a base of fine, perfectly flat, sheets of wood, which are superimposed to form a compact block wherein the grain of adjacent layers of wood face different directions, specifically crossed, said sheets of wood being fixed together by a suitable adhesive (phenolic type). In this way, panels or boards with high mechanic resistance are produced, which in changing environmental conditions have a long useful life and do not undergo deformations which may damage or cancel out their features as a structural element.

The technical evolution and the need to provide a better service to certain industrial and construction sectors has obliged new products to be developed, which require less subsequent manipulations by the end users of the conventional plywood board, producing a final product with new surface characteristics, which is a considerable improvement to other possible current solutions.

### DESCRIPTION OF THE INVENTION

The "composite" board the invention proposes resolves the aforementioned problem in a fully satisfactorily manner, so that it can be used in extremely adverse environmental conditions, without deteriorating in any way.

For this, and more specifically, the board the invention proposes, starting from a conventional plywood core, centres its characteristics on the fact that it incorporates coverings, on its larger faces (and in some cases on its edges), formed by a PVC sheet, which can optionally be replaced by a sheet of polypropylene or similar, in accordance with its final application.

The covering sheet, which gives the board, as a whole, very high resistance to the effects of the outside elements, is solidly fixed to the plywood core, with the aid of a hot-melt type adhesive (specific process), which can also withstand said agents.

This adhesive ensures the perfect, non-removable fixing of the covering sheet to the plywood core, when it is subjected to high temperatures or for other causes. In some cases, the four edges of the board can also be protected with fine sheets of PVC, glued with an adhesive similar to that of its upper and lower faces, giving characteristics of high resistance to the penetration of damp to the centre of the board, considerably improving its long-term duration.

There only remains to indicate that, in accordance with the application planned for the board in each case, said sheet covering may have a different finish, such as smooth for walls, rough or grooved for floors, etc. with different physical characteristics according to its final use, which may be for outside use (exposed to the elements), or inside use.

### DESCRIPTION OF THE DRAWINGS

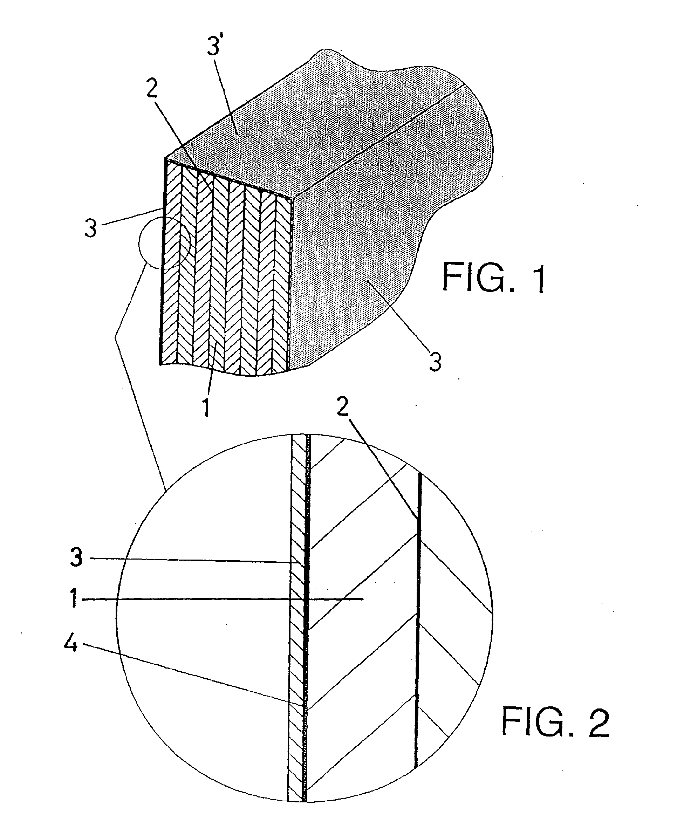

To complement the description being made and for the object of helping towards a better understanding of the characteristics of the invention, in accordance with an example of preferred embodiment thereof, a set of drawings is attached to said description, forming an integral part thereof, and wherein the following has been represented with a merely illustrative, non-limiting character
Figure 1 shows a perspective partial detail section of a outdoor plywood board, made in accordance with the object of the present invention.
Figure 2 shows an enlarged detail of the section of figure 1.

### PREFERRED EMBODIMENT OF THE INVENTION

In the light of the figures described, it can be observed that the board the invention proposes is comprised of a plywood core (1), with classic structure based on fine layers of wood with crossed grain, joined together by intermediary layers of adhesive (2), in order to produce maximum mechanical resistance with minimum risk of deformation. Now, in accordance with the invention, the board has said core (1) covered on its largest faces, but preferably on both its largest faces and the edges, with sheets (3), (3'), based on a plastic material resistant to the effects of the outside elements, such as, for example, PVC.

This covering sheet (3) is fixed to the wood core (1) with the aid of a special adhesive (4) also resistant to environmental agents such as damp, solar radiation, sharp temperature changes, high temperatures, etc, specifically in a hot-melt type resin, so that the join between the covering sheets (3) and the resin (4) acting as adhesive, establish a water-tight cover for the wood core (1) (if the four edges are protected), which ensures a perfect protection thereof.

## Claims

1. Industrial composite board for outdoor and indoor use, based on a plurality and superimposed sheets of wood, with its grain alternately crossed and fixed together by adhesive, forming a compact body, **characterized in that** it has, on at least one of its larger faces, and preferably on both these and its edges, a covering formed by plastic sheets (3 and 3'), specifically PVC, polypropylene or similar, fixed to the wood core (1) by a hot-melt type adhesive (4), which can withstand the effects of the elements.
